Europäisches Patentamt

European Patent Office

Office européen des brevets

(19)

(11) Publication number: **0 225 110 B1**

## (12) EUROPEAN PATENT SPECIFICATION

(45) Date of publication of patent specification: **17.04.91**  (51) Int. Cl.⁵: **C08B 30/12, C12C 5/02**

(21) Application number: **86308982.7**

(22) Date of filing: **18.11.86**

(54) **A Method of producing a cereal adjunct suitable for use in brewing and a method of brewing involving such adjuncts.**

(30) Priority: **25.11.85 GB 8528981**

(43) Date of publication of application:
**10.06.87 Bulletin 87/24**

(45) Publication of the grant of the patent:
**17.04.91 Bulletin 91/16**

(84) Designated Contracting States:
**AT BE CH DE ES FR GB GR IT LI LU NL SE**

(56) References cited:
**EP-A- 0 133 132**
**EP-A- 0 138 356**
**US-A- 3 054 676**

**CEREAL CHEMISTRY, vol. 52, no. 3, part I, May-June 1975, pages 283-297, American Association of Cereal Chemists, Inc., St. Paul, Minnesota, US; C.MERCIER et al.: "Modification of carbohydrate components by extrusion-cooking of cereal products"**

(73) Proprietor: **EDWARD BILLINGTON & SON LIMITED**
**Cunard Building**
**Liverpool 3 Merseyside(GB)**

(72) Inventor: **Statham, Roger**
**30 Hardy Road**
**Lymm Cheshire, WA13 0NY(GB)**
Inventor: **Taylor, John Frederick**
**Danemere Harrop Road**
**Hale Cheshire(GB)**

(74) Representative: **Taylor, Phillip Kenneth et al**
**W.P. THOMPSON & CO. Coopers Building**
**Church Street**
**Liverpool L1 3AB(GB)**

## Description

The present invention relates to a method of producing cereal adjuncts suitable for use in brewing and to a method of brewing involving such adjuncts.

The brewing, for example, of beer, is normally and traditionally prepared from malt, from which a wort is prepared during the so-called brewing process. This wort undergoes fermentation in the presence of yeast in order to become an alcoholic beverage. It has been proposed to substitute at least a part of the malt by a cereal adjunct. It has further been proposed to use as the cereal adjunct an extruded product the extrusion effecting the cooking and gelatinization of the cereal to produce a product which may be used directly with the malt to produce a wort.

In U.S. Patent 4,286,058, a method is described of producing sugars from a starch-bearing material in which the starch-bearing material having a moisture content of at least about 80% of the saturation level of the material, is extruded at elevated temperature and pressure through a rotating screw and under conditions which subject the wort material to mechanical shear within the screw, to effect gelatinization of at least about 95% of the gelatinizable fraction of the wort material and thereafter adding an enzyme to the gelatinized material without drying of the gelatinized material to convert at least a portion of the gelatinized material to sugars. The process is conducted with such an excess of water that the tubular barrel of the extruder is completely filled with water adjacent to the inlet. The process is designed to be a part of the brewing process and entails very substantial modification of the brewing plant.

In French Patent Publication No.2,549,849, there is described a process for the preparation of a sweetened wort from at least one cereal wherein the cereal undergoes initial starching through heating in the presence of water and is then mixed with an enzyme-bearing product in order to undergo saccharification until the sweetened wort is obtained, the process being characterised by the fact that starching is replaced by boiling/extrusion at a temperature exceeding $100°$ C and in which the cereal is continuously fed with a quantity of water which can be reduced to that required for bursting the starch grains, through a screw-type extruder fitted with devices for heating the mash, with the extruded cereal being thereafter mixed with an enzyme bearing product and an additional amount of water in order to prepare the wort. The product is relatively dry, the quantity of water introduced into the extruder being reduced to that just needed to produce a bursting of the grain, usually about a 5% addition of water at the start of extrusion. Whilst temperatures above $100°$ C are taught, the range of temperatures used is between 130 and $150°$ Centigrade. The process of the French Specification differs from that of U.S. Specification No.4,286,058 in that it teaches a diametrically opposite method of operation in using a minimal quantity of water in the extruder.

It has been proposed in European Publication No. 0138356A to use as the brewing adjunct in a process for producing a fermented product or a distilled fermented product from the mash containing malt and a brewing adjunct, an extruded starch product which has been passed through an extruder cooler to attain a temperature in the extruder of from $60°$ C through $180°$ C at a moisture content of from 12% through 30% by weight at a pressure of at least 3 bars.

Both the above U.S. Specification No.4,206,058 and French Specification No.2,549,849 are concerned with modifications of the traditional methods and plant and do not consider the problem to be solved in providing an adjunct which can be used directly in the traditional brewing process without modification either of the plant or method. Furthermore, whilst European Publication No. 0138356A is concerned with an adjunct for direct use neither that specification nor those of U.S. Specification No.4,206,058 and French Specification No.2,549,849 however, really concern themselves with the yield to be obtained from the use of cereal or starch products, or the factors which determine this yield. The yield is an important factor in brewing and if an adjunct is to be used even apparently small differences in yield can make the difference between a viable process and one which is uneconomic. Furthermore, there are other problems in brewing, such as the run offtime for the wort separation.

It has been found that the conditions within the extruder significantly affect the yield and the run off time and that the general conditions taught in the prior art are not conducive to producing yields and adjunct properties which are or could result in a viable traditional brewing process.

It is an object of the present invention therefore, to provide an adjunct directly usable in the traditional brewing or distilling process and which provides good yields and which enables satisfactory run-off to be achieved.

According to the present invention, a method is provided of producing a starch adjunct suitable for use in brewing and distilling, which comprises extruding a starch product through an extruder cooker at an elevated temperature characterised in that the starch product to be extruded has a moisture content of at least 20% by weight and in which the extrusion is effected under high shear conditions, which result, in the absence of externally applied heat, in a temperature in the extruder of at least 130°C to produce an extruded product, the amount of moisture in the starch product to be extruded being not so great that the physical state of the starch product to be extruded effects a lowering in the degree of shear which can be applied thereto by any given rotational speed of the screw of the extruder cooker and in that the extruded product is dried to a moisture content not greater than 14%, the dried product having a minimum lateral dimension of 1mm.

It has been found according to the invention that the shear conditions should be such that the temperature in the extruder reaches at least 130°C, preferably at least 150°C, and most preferably at least 170°C, in order to effect a sufficient breakdown of the starch and other carbohydrates to produce effective yields. At any given shear level, higher temperatures can be achieved by providing heating means surrounding a portion of the barrel of the extruder. However, the moisture content of the material being extruded at any given temperature should be such that it prevents or reduces to a minimum the conversion of starch and other carbohydrates molecules into non-fermentable products.

In any extruder, the geometry of the screw or screws, the geometry of the inside of the barrel or barrels, the clearance between barrel and screw or screws, the size of the die and the shape of the die all have a direct effect on the amount of shear which can be applied. For any given extruder assembly however, these factors are constant. In addition, the rotational speed of the screw or screws, flow rate of material and the physical state of the material being extruded also have an affect on the amount of shear applied. Normally, the flow rate is adjusted to get as close to the maximum as possible for a given extruder assembly. For a given material therefore, having a specific water content, the screw speed is the principal means of adjusting shear. According to the present invention the rotational speed of the screw or screws should be adjusted to give the shear conditions necessary to break down the starch and other carbohydrates molecules into fermentable products. It has also been found however, that in addition to the high shear rate, the moisture content must be adjusted so as to minimise or prevent the breakdown of the starch and other carbohydrates molecules into non-fermentable products. If the water content is too low, then such breakdown occurs to an extent which reduces the yield to unsatisfactory levels. On the other hand, the amount of moisture in the extruder should not be so great that the necessary shear forces cannot be achieved, nor so high that excessive drying needs to be undertaken after the product leaves the extruder. It has been found however, according to the invention that the moisture content in the extruder must be at least 20% in order to minimise the formation of non-fermentable materials.

In the conventional brewing process the time for wort separtion has to be relatively short. Thus the amount of wort which can be separated in a given time is critical in the conventional process. With pure malt, no problems are normally encountered, but when an adjunct is used to replace some of the malt, unless the run-off approaches that of pure malt the process will be uneconomic even though the yield level of the adjunct is reasonably high (e.g. as high as or even higher than that of pure malt). We have found that satisfactory run-off for extruded starch adjuncts is both shear and temperature dependent and that for a given effective degree of shear the minimum temperature that needs to be achieved in the extruder to achieve satisfactory run-off is different for different starch bearing materials.

According to a further embodiment of the present invention therefore, the applied shear and the water content should be adjusted to those values which in the absence of additional heat supplied from an external source would attain the minimum temperature in the extruder required to achieve satisfactory run-off when the adjunct product is used in the brewing process. In the case of wheat we have founed the minimum temperature for satisfactory run-off to be at least 140°C and preferably at least 150°C. In the case of barley the minimum temperature is higher than that for wheat and is more of the order of 160°C and preferably 170°C.

Without wishing to be bound by any particular theory, it is believed that at least in the case of barley the improvement in run-off is achieved as a result of degradation in the extruder of the $\beta$-glucan content of the starting starch material. If $\beta$-glucans are present in the wort they have an adverse effect on run-off. If the applied shear conditions in the extruder are such as to degrade the $\beta$-glucans then their effect on the run-off of the wort is correspondingly reduced.

It has also been found that the rate of cooling of the extrudate after it leaves the extruder also has an effect on run-off in that if the rate of cooling is too high the run-off time is extended. Thus the slower cooling achieved by conveying the extrudate away from the extruder on a conveyor has less effect on run-off than removing the extrudate through a pneumatic conveyor. The effect is small in comparison to the effect of shear but can become significant if in the case of barley the shear conditions are such that the $\beta$-glucans are not degraded sufficiently in the extruder.

It has also been found, that the physical form of the extruded product is important in terms of the mashing time and wort separation in the brewing process. If the extruded material is kept within limits for the lateral dimensions of from 1 mm to 10 mm, then the mashing time and wort separation time can remain unaffected. If, for example, the material were ground into a flour prior to or during the preparation of the mash, then it has been found that excessive wort separation times can result. If, on the other hand, the extrudate is greater than 10 mm thick, and is not ground prior to mashing longer mashing times become necessary and possibly at lower temperatures.

By the method of the invention, an adjunct is produced which can be added directly to the ground mash using existing brewing equipment. In this way no modification of the traditional brewing process is necessary, either in the plant or in the handling equipment for the grain.

The temperature in the extruder barrel may be increased if desired by surrounding at least a portion of the barrel by a heating means. This has the double effect of preventing heat generated inside the barrel from being lost and by causing heat to pass through the barrel into the material contained therein.

It is seen therefore that the parameters of moisture content, shear forces applied and temperature are interrelated. The moisture content insofar as it affects the physical state of the material affects the amount of shear which can be applied and the amount of shear applied affects the temperature which is attained. The amount of shear applied and the temperature attained (with or without externally applied heat) determines the amount of moisture necessary to keep non-fermentable material formation at an acceptable level. In general the higher the shear applied and the higher the temperature, the greater the degree of breakdown of the starch molecules becomes. The moisture content affects the amount of non-fermentable breakdown products which are produced and must be at a level to keep this amount at acceptable levels. The acceptable level for non-fermentable breakdown products depends on the overall degree of breakdown of the starch molecules - the higher the overall degree of breakdown the higher the acceptable level for non-fermentable products becomes, provided a larger amount of fermentable breakdown products will also be produced at the same time.

If the moisture content is increased to a level where the physical state of the material being treated begins to lower the degree of shear which can be applied thereto by a given screw rotational speed, further increase in moisture content can have a deleterious effect and result in lower overall breakdown of the starch molecules. It is preferred to operate the process at barrel temperatures of at least 150 °C, most preferably at barrel temperatures of the order of 170 °C. Such barrel temperatures will, of course, give rise to higher temperatures still within the die.

The extruded product after drying must have a minimum lateral dimension of 1 mm. Preferably the lateral dimension (i.e. thickness of the extrudate) is from 2 to 3 mm. Preferably the extruded material is chopped or cut into a granulated form, the granules approximating to the size of normal barley grains. In this form it can be handled by existing conveying equipment in a brewery. Surprisingly, it has been found that when added to the mash in this form the wort separation remains satisfactory, whereas if the extrudate is ground to a flour considerable problems are experienced in wort separation. The extrudate product can if desired be used directly, without chopping but would then require some modification of the handling and conveying equipment in the brewery.

The invention will be further illustrated by reference to the following examples.

Example 1

An extruded adjunct was prepared from barley as follows. The barley was first ground through a 1.5 mm screen. The ground barley was then processed through a single screw Wenger X 20 extruder fitted with two outlet dies having apertures of 6.35 mm under the following conditions:

Extruder Speed     600

Water to mixing cylinder  -

Water to Extruder   17.28 1/hr (3.8 gall/hr)

Extruder Amps    40

Feeder rate approx.   125 Kg/hr

Temp. at 1st head   90°C

Temp. at 2nd head   110°C

Temp. at 3rd head   150°C

Temp. at 4th head   150°C

Temp. at 5th head   145°C

Steam to mixing cylinder $^1/_2$ turn

### Example 2

An extruded adjunct was made from wheat following the method of Example 1 except that extrusion was effected through eight 3.18 mm orifies and the conditions of extrusion were as follows:

Extruder Speed rev/min 525

Water to mixing cylinder 10.46 1/hr (2.3 gall/hr)

Water to Extruder   12.27 1/hr (2.7 gall/hr)

Ext. Amps     40

Feeder rate     75 Kg/hr

Temp. at 1st head   50°C

Temp. at 2nd head   100°C

Temp. at 3rd head   140°C

Temp. at 4th head   155°C

Temp. at 5th head   135°C

Steam to mixing cylinder $^1/_2$ turn

### Example 3

An extruded adjunct was made from maize using the method of Example 2 except that the conditions of extrusion as follows:-

| | |
|---|---|
| Extruder Speed rev/min | 575 |
| Water to mixing cylinder | Nil |
| Water to Extruder | 10.46 l/hr (2.3 gall/hr) |
| Ext. Amps | 42 |
| Feeder rate | 150 Kg/hr |
| Temp. at 1st head | 105°C |
| Temp. at 2nd head | 160°C |
| Temp. at 3rd head | 150°C |
| Temp. at 4th head | 170°C |
| Temp. at 5th head | 170°C |
| Steam to mixing cylinder | $1/2$ turn |

Example 4

An extruded adjunct was made from barley using the method of Example 1 except that the conditions of extrusion were as follows:

| | |
|---|---|
| Extruder Speed | 500 |
| Water to mixing cylinder | - |
| Water to Extruder | 23.55 l/hr (5.18 gall/hr) |
| Extruder Amps | 40 |
| Feeder rate approx. | 150 Kg/hr |
| Temp. at 1st head | 70°C |
| Temp. at 2nd head | 95°C |
| Temp. at 3rd head | 130°C |
| Temp. at 4th head | 130°C |
| Temp. at 5th head | 115°C |
| Steam to mixing cylinder | None |

6

Example 5

An extruded extract was made from barley following the method of Example 1 except that the conditions were as follows:

| | |
|---|---|
| Extruder Speed | 400 |
| Water to mixing cylinder | - |
| Water to Extruder | 28.09 1/hr (6.18 gall/hr) |
| Extruder Amps | 35 |
| Feeder rate approx. | 175 Kg/hr |
| Temp. at 1st head | 70°C |
| Temp. at 2nd head | 90°C |
| Temp. at 3rd head | 105°C |
| Temp. at 4th head | 110°C |
| Temp. at 5th head | 105°C |
| Steam to mixing cylinder | None |

Example 6

An extruded extract was made from barley using the method of Example 1 except that the conditions of extrusion were as follows:

| | |
|---|---|
| Extruder Speed rev/min | 525 |
| Water to mixing cylinder | 6.36 1/hr (1.4 gall/hr) |
| Water to Extruder | 2.59 1/hr (0.57 gall/hr) |
| Ext. Amps | 34 |
| Feeder rate | 100 Kg/hr |
| Temp. at 1st head | 100°C |
| Temp. at 2nd head | 130°C |
| Temp. at 3rd head | 140°C |
| Temp. at 4th head | 145°C |
| Temp. at 5th head | 180°C |
| Steam to mixing cylinder | $1/2$ turn |

In order to test the yields of the adjuncts produced according to the invention, three of these adjunct were used with lager malt in brewing trials, lager malt alone and wheat-flour pellets in conjunction with lager malt being used for comparative purposes. The following materials and conditions were observed.

Materials for the grist

(i)Lager Malt. Relevant analyses are noted in the "Results" section of this report. The low kilning temperatures used in preparing this malt should have ensured that it had a complement of heat-sensitive enzymes.

(ii) wheat-flour pellets (These were Summitt pellets, manufactured by RHM, Rank Hovis MacDougall) used as a "reference" adjunct because the properties were well understood.

(iii) Extruded barley (Ex. 1). The extruded material was ground for use in the following tests. However after the initial brewing trials attention was confined to the "extruded barley-150°C"

(iv) Extruded maize (Ex. 3). The material was ground for use in the tests.

(v) Extruded wheat (Ex. 2). The material was ground for use in the tests.

The moisture contents of these adjuncts are given in Table 1.

Enzymes used

(i) Ceremix (Novo). Bacillus subtilis preparation, contains standardised levels of $\alpha$-amylase, $\beta$-glucanase and protease.

(ii) Bioglucanase : $\beta$-Blucanase (Biocon). Thermostable $\beta$-glucanase from fungus, Penicillium emersonii .

Neither of these enzymes contributed to a detechable extend to the SG's of the worts at the levels employed, and so they did not add to the hot water extracts.

In mashes made with 30% adjunct and 70% malt the extract yield from the adjunct was calculated.

For example -

Lager malt-extract "as is" 285.7 l°/kg

moisture 6.2%

extract :on dry" 304.6 l°/kg

Extract "as is" wheat flour pellets (30%) + lager malt (70%) = 290.5 l°/kg

Extract from malt 285.7 x 0.7 - 200.0 l°/kg

Extract from wheat flour = 90.5 l°/kg

Thus if the entire 50 g mash had been of wheat flour, the extract would have been = $90.5 \times \frac{10}{3}$

= 301.7 l°/kg "as is"

Moisture wheat flour pellets 13.4%

Thus wheat flour extract = 348.4 l°/kg "on dry", d.m.

The viscocities reported (cP) are - the kinematic viscosities, ($mm^2$/s, according to the IOB) multiplied by the S.G. of the liquid under test.

(ii) Brewing trials

Brewing Water Towns water supply treated with salts:-

| | |
|---|---|
| **Calcium sulphate (anhydrous)** | **235g** |
| **Calcium chloride (6 H₂O)** | **73.5g** |
| **Magnesium sulphate (7 H₂O)** | **126 g** |
| **Sodium chloride** | **17 g** |

The above are added to 1 litre and the salt slurry is used at the rate of 100 ml/68 liter.

Mill Boby two roll dry mill; motorised and with a 40 thou gap setting.

Grist Total 10 kg for all brews, some being all-malt, others consisting of 3 kg of adjunct and 7 kg of lager malt.

Brewing 10 kg of grist was mixed in the Steineker mash mixer with 30 l of water (containing brewing salts) at 63°C. The temperature achieved was 48/49°C being raised to 50°C using fast mixing and the electric heaters. Ceremix 2 x L (24 ml) was added at mashing. After 1 hour at 50°C the temperature was raised to 65°C using fast mixing and the heaters. From the start of the temperature rise to 65°C one hour was given for alpha amylase action. Then the mash was transferred to the lauter tun using the mono pump. Bioglucanase (4mls) was added to the mash as it fell onto the lauter plate. Recirculation was carried out for 30 minutes, 45 l of wort was then collected in the copper with sparging. After the sparge was stopped the 35 l under volume of wort was run into the copper to give a preboil copper vol 80 l. Styrian/Hallertau hop pellets (120 g) were added as the boil started. Boiling was continued for 90 minutes. A constant hot volume for all brews at the end of boil was achieved at 67 l. The hot wort was filtered through cotton wool and cooled at 15/16°C. After cooling it was diluted to S.G. 1038 with cold tap water and pitched with Davenports brewery yeast at 2.8 g/l. It was allowed to ferment at approx. 20°C for approx. 5 days. The beers were transferred to Cornelius vessels and conditioned at 4°C for about 2 weeks before filtration through Carlson Ford BK9 filter sheets.

Bioglucanase was not added to the control all-malt brew and was added to the barley brew in the lauter mixer after recirculation. In the other three brews, addition of this enzyme was as described in the brewing method.

A volume of about 20 l was run off from the lauter mixer before the mash bed became visible and could be sparged to run the copper volume to 45 l. Therefore the sparge water volume was about 25 l in all cases.

After raking the lauter-mixer bed more solids were present in the worts that were run to the copper. Two batches of cotton wool had to be used to filter all but the control "all malt" worts prior to fermentation. Wort viscosities were determined on unfiltered worts ex fermenter and prior to dilution to 1038 O.G. Collected wort O.G. (15°C) values and volumes are in the tables Worts were all diluted to 1038.0 before fermentation.

The results of these brewing trials are summarised in Tables 2A, 2B and 2C. The mashing process showed no particular problems that would not be anticipated (Table 6A) with a high adjunct rate (30%). The temperatures achieved are as good as can be expected (Table 6B).

The O.G. values of the collected 67 l worts (before dilution to 1038), are roughly in the order to be expected, except that the O.G. of the all-malt wort is relatively low. However this mash was the only one that did not receive an addition of Bioglucanase (Table 6A). All the wort and beer viscosities are acceptably low. All the worts (diluted to 1038) fermented down well, indicating that a practically uniform degree of fermentability had been achieved. The flavours of the final beers were all fully acceptable, but they differed. Of the 'adjunct beers' the one made with extruded barley seemed to be preferred.

## TABLE 1

| | Moisture content<br>(%, as is) |
|---|---|
| Lager malt | 9.1 |
| Wheat flour pellets | |
| (Summitt pellets RHM) | 13.1 |
| Ground extruded barley - | |
| (Example 1) | 8.7 |
| Ground extruded maize | |
| (Example 3) | 8.6 |
| Ground extruded wheat | |
| (Example 2) | 6.0 |

TABLE 2A

| Grist Mix | Mixing Details | Mashing in difficulties | Ceremix (ml) | Bioglucanase (ml) | Run off difficulties |
|---|---|---|---|---|---|
| 1 100% Lager malt (10kg) | Boby milled | None | 24 | – | None |
| 2 30% Extruded barley (Ex.1) (10 kg total) | Hammer milled | None | 24 | 4 added to lauter when mash set | Some hand racking necessary |
| 3 30% Extruded wheat (Ex. 2) (10 kg total) | Boby milled | None | 24 | 4 added to lauter at transfer | Some hand racking necessary |
| 4 30% Extruded maize (Ex. 3) (10 kg total) | Hammer milled | None | 24 | 4 added to lauter at transfer | Some hand racking end of recirculation |
| 5 30% Wheat flour flour pellets (10 kg total) | Boby milled | None | 24 | 4 added to lauter at transfer | Some hand racking necessary prior to sparging |

EP 0 225 110 B1

EP 0 225 110 B1

## TABLE 2B

### Details of wort preparation

| Grist mix | Mash temperature after mashing in (°C) | Mash temperature after temperature rise (°C) | Mash temperature at recirculation (°C) | Mash temperature during sparge (°C) | Specific gravity of 12 l washings from mono pump after mash transfer | Specific gravity of last runnings from lauter | Volume of hot wort (l) | Diluted to 1038 Fermenter volume of liquid (l) |
|---|---|---|---|---|---|---|---|---|
| 100% Lager malt | 51.0 (one motor failed; rose to 53) | 65.3 | 62.0 | 67.5 | 1014.5 | 1007/ 1007.5 | 67 | 60 |
| 30% Extruded barley (Ex.1) | 51.0 | 66.4 | 63.0 | 66.0 | 1007.0 | 1014.0 | 67 | 61 |
| 30% Extruded wheat (Ex.2) | 51.0 | 65.1 | 61.0 | 63.0 | 1005.5/ 1006 | 1006.0 | 67 | 60 |
| 30% Extruded maize (Ex.3) | 50.6 | 65.9 | 63.5 | 66.5 | 1009.5/ 1010.0 | 1013/ 1013.5 | 67 | 56 |
| 30% Wheat flour pellets | 50.7 | 65.3 | 60.5 | 66.5 | 1010.0 | 1006.5 | 67 | 62 |

TABLE 2C

DETAILS OF THE BEERS

| Grist mix | Bitterness (EBU) | Head retention Rudin (secs) | Wort viscosity (mm²/S) | (cP) | Beer viscosity (mm²/S) | (cP) | Flavour notes* | Original gravity (15°C) before dilution | Post-ferment-ation final gravity |
|---|---|---|---|---|---|---|---|---|---|
| 1 100% Malt | 23 | 91 | 1.58 | 1.64 | 1.50 | 1.56 | Good flavour | 1040.5 | 1003.0 |
| 2 30% Extruded barley (Ex.1) | 22 | 68 | 1.56 | 1.62 | 1.48 | 1.54 | Good flavour. Extra "bitter-ness" not due to hops | 1041.0 | 1003.0 |
| | | | | | | | Flavour intensities | | |
| 3 30% Extruded wheat (Ex. 2) | 20 | 58 | 1.67 | 1.74 | 1.50 | 1.56 | Less than 1** | 1042.0 | 1002.5 |
| 4 30% Extruded maize (Ex. 3) | 19 | 67 | 1.57 | 1.63 | 1.39 | 1.50 | Less than 1** | 1040.0 | 1002.5 |
| 5 30% Wheat flour pellets | 19 | 75 | 1.71 | 1.78 | 1.48 | 1.54 | Less than 1** | 1043.0 | 1003.0 |

* None of the beers had flavours or aromas that were at all objectionable.  The beer with maize was judged to have the best aroma.

** Beers exceptionally bland.

EP 0 225 110 B1

Example 7

A further series of extruded materials was produced from wheat using a constant screw speed of 600 r.p.m. but in which a series of rising moisture contents of the starting material were used. Each series was repeated at temperatures of 130°C, 150°C and 170°C. The total fermentable sugars (fructose, glucose, sucrose, maltose and malto trioses) each product was determined together with hot water extract and the run-off in 30 minutes and the non-fermentable sugars in each sample calculated. The results are tabulated in Table 3.

Example 8

A similar series to that carried out in Example 7 was carried out but using barley instead of wheat. The results are shown in Table 4.

Example 9

Two series of extrusions were performed at 400 revs. per min. at 20% moisture and a temperature of 170°C, 175°C and 197°C and the other at 25% moisture and temperatures of 150°C, 170°C and 175°C. The results for run-off in 30 minutes are set out in Table 5.

Referring to Table 3, it is seen that the optimum moisture content for minimising the non-fermentable sugars is 22% and that dropping below 20 (i.e. the 16%, 170°C figure) produces excessive non-fermentable sugars. Furthermore, the run-off in 30 minutes is poor at 130°C, because reasonable at 150°C and is maintained at 170°C. In contrast Table 5 shows that at 400 r.p.m. the run-off in 30 minutes is consistently poor and in fact decreases as the temperature and moisture increase. This is consistent with there being insufficient shear.

The figures for barley set forth in Table 4 show a similar effect of moisture content on the non-fermentable sugar production to that in Table 3. The run-off in 30 minutes however is still low at 150°C but reaches reasonable levels at 170°C.

EP 0 225 110 B1

## TABLE 4  (Example 8)

**BARLEY**   Extruder screw revs. per min. 600

### TEMPERATURE

| % MOISTURE | RO* 30m | 130°C | | | RO 30m | 150°C | | | RO 30m | 170°C | | |
|---|---|---|---|---|---|---|---|---|---|---|---|---|
| | | Total F. Sugars | Hot Water Extract | Non F. Sugars | | Total F. Sugars | Hot Water Extract | Non F. Sugars | | Total F. Sugars | Hot Water Extract | Non F. Sugars |
| 30 | 60 | 6.579 | 299.1 | 28.20 | 60 | 6.378 | 297.6 | 29.94 | 98 | 6.421 | 298.9 | 29.83 |
| 25 | 62 | 6.517 | 297.3 | 28.37 | 56 | 6.928 | 299.1 | 24.31 | 102 | 5.954 | 297.6 | 34.54 |
| 22 | 57 | 6.663 | 301.1 | 27.73 | 50 | 6.500 | 297.9 | 28.70 | 92 | 6.398 | 298.0 | 29.84 |
| 20 | 48 | 6.289 | 300.7 | 31.56 | 50 | 6.593 | 298.5 | 27.83 | 76 | 6.515 | 297.1 | 28.37 |

## TABLE 3 (Example 7)

### WHEAT    Extruder screw revs. per min. 600

#### TEMPERATURE

| % MOISTURE | 130°C | | | | 150°C | | | | 170°C | | | |
|---|---|---|---|---|---|---|---|---|---|---|---|---|
| | RO* 30m | Total** F. Sugars | Hot Water Extract | Non F.*** Sugars | RO 30m | Total F. Sugars | Hot Water Extract | Non F. Sugars | RO 30m | Total F. Sugars | Hot Water Extract | Non F. Sugars |
| 30 | 64 | 6.578 | 294.1 | 26.89 | 104 | 6.589 | 293.8 | 26.72 | 110 | 6.496 | 294.4 | 27.86 |
| 25 | 88 | 6.958 | 294.5 | 22.76 | 104 | 6.230 | 292.7 | 30.40 | 104 | 6.645 | 291.1 | 25.61 |
| 22 | 66 | 7.044 | 294.7 | 21.87 | 106 | 6.936 | 294.3 | 23.07 | 98 | 6.788 | 293.2 | 24.29 |
| 20 | | | | | 106 | 6.547 | 294.0 | 27.19 | 108 | 6.497 | 294.1 | 28.08 |
| 16**** | | | | | | | | | 68 | 6.608 | 292.9 | 30.85 |

\*    RO 30 m is run-off in 30 minutes.

\*\*    Total F. sugars is total fermentable sugars.

\*\*\* Non F. sugars is non-fermentable sugars.

\*\*\*\* Comparative Example (not an example of the invention).

## TABLE 5

### WHEAT    SCREW REVS PER MINUTE = 400

#### TEMPERATURE

| % MOISTURE | 150°C RO 30m | 170°C RO 30 m | 175°C RO 30 m | 197°C RO 30 m |
|------------|--------------|---------------|---------------|---------------|
| 25         | 76           | 64            | 56            |               |
| 20         |              | 78            | 72            | 70            |

## Claims

1. A method of producing a starch adjunct suitable for use in brewing and distilling, which comprises extruding a starch product through an extruder cooker at an elevated temperature, characterised in that the starch product to be extruded has a moisture content of at least 20% by weight and in which the extrusion is effected under high shear conditions which result, in the absence of externally applied heat, in a temperature in the extruder of at least 130°C to produce an extruded product, the amount of moisture in the starch product to be extruded being not so great that the physical state of the starch product to be extruded effects a lowering in the degree of shear which can be applied thereto by any given rotational speed of the screw of the extruder cooker and in that the extruded product is dried to a moisture content not greater than 14% by weight, the dried product having a minimum lateral dimension of 1 mm.

2. A method as claimed in claim 1, characterised in that the shear conditions are such that the temperature in the extruder reaches at least 150°C.

3. A method as claimed in claim 1 or 2, characterised in that the shear conditions are such that the temperature in the extruder reaches at least 170°C.

4. A method as claimed in any of claims 1 to 3, characterised in that the initial moisture content of the starch product to be extruded is substantially 22%.

5. A method as claimed in any of claims 1 to 4, in which the starch product is wheat, the rotational speed of the extruder screw is such as to result in a temperature in the extruder in the absence of external heat of at least 140°C.

6. A method as claimed in any of claims 1 to 4, in which the starch product is barley, the rotational speed of the extruder screw is such as to result in a temperature in the extruder in the absence of external heat of at least 170°C.

7. A method as claimed in any of claims 1 to 6, characterised in that the maximum lateral dimension of the extruded material after drying is not more than 10 millimetres.

8. A method as claimed in any of the preceding claims, characterised in that the lateral dimensions of the extrudate after drying are from 2 to 3 millimetres.

9. A method as claimed in claim 7 or 8, characterised in that the extruded material is cut into granules

17

approximating to the size of cereal grains.

## Revendications

1. Procédé pour produire un succedané d'amidon utilisable en brasserie et en distillerie, qui comprend l'extrusion d'un produit d'amidon à travers un cuiseur extrudeur à une température élevée, caractérisé en ce que le ptoduit d'amidon devant ètre extrude a une teneur en humidité d'au moins 20% en poids et que l'sxtrusion est effecturée dans des conditions de cisaillement élevé quiqui aboutissent, en l'absence d'apport de chaleur extérieure, à une température dans l'extruder d'au moins 130°C pour fournir un produit extrudé, ia quantité d'humidité dans le produit d'amidon à extruder n'étant pas grande au point que l'état physique du produit d'amidon à extruder opère un abaissement du degré de cisaillement qui peut lui être appliqué par une quelconque vitesse de rotation donnée de la vis du cuiseur extrudeur et que le produit extrudé est sèche à une teneur en humidite ne dépassant pas 14% en poids, le produit sec ayant une dimension latérale minimum de 1 mm.

2. Procédé suivant la revendication 1, caractérisé en ce que conditions de cisaillement sont telles que la température dans l'extrudeur atteint au moins 150%C.

3. Procédé suivant la revendication 1 ou la revendication 2, caractérisé en ce que les conditions de cisaillement sont telles que la température dans l'extrudeur atteint au moins 170°C.

4. Procédé suivant l'une quelconque des revendications 1 à 3, caractérisé en ce que la teneur initiale en humidité au produit d'aimidon à exruder est pratiquement de 22%.

5. Procédé suivant l'une quelconque des revendications 1 à 4 caractérisé en ce que le produit d'amidon est le blé et que la vitesse de rotation de la vis de l'extrudeur est telle qu'il en résulte une temperature dans l'extrudeur en l'absence de chaleur extérieure d'au moins 140°C.

6. Procédé suivant l'une quelconque des revendications 1 à 4 caractérisé en ce que le produit d'amidon est l' orge et que la vitesse de rotation de la vis de l'extrudeur est teile qu'il en résulte une température dans l'extruder en l'absence de chaleur extérieure d'au moins 170°.

7. Procédé suivant l'une quelconque des revendications 1 à 6 caractérisé en ce que la dimension latérale maximum du matériau extrudé après séchage ne de'passe pas 10 mm.

8. Procédé suivant l'une quelconque des revenodications 1 à 7, caractérisé en ce que les dimensions latérales de l'extrudat aprés séchage sont comprises entre 2 et 3 mm.

9. Procédé suivant la revendicatiron 7 ou la revendication 8, caractérisé en ce que le matériau extrudé est débité en granules ayant à peu près la dimension de grains de céréales.

## Ansprüche

1. Verfahren zur Herstellung eines zum Brauen und Destillieren geeigneten Stärkezusatzes, wobei ein Stärkeprodukt durch einen beheizbaren Extruder bei erhöhter Temperatur extrudiert wird, dadurch gekennzeichnet, daß das zu extrudierende Stärkeprodukt einen Feuchtigkeitsgehalt von wenigstens 20 Gew.-% aufweist, wobei das Extrudieren unter hohen Scherbedingungen bewirkt wird, die ohne Wärmezufuhr von außen zu einer Temperatur von wenigstens 130°C in dem Extruder führen, um ein Extrusionsprodukt zu erzeugen, wobei der Feuchtigkeitsgehalt in dem zu extrudierenden Stärkeprodukt nicht so groß ist, daß der physikalische Zustand des zu extrudierenden Stärkeproduktes eine Minderung des Maßes an Scherung bewirkt, die auf das Produkt durch eine beliebige Drehgeschwindigkeit der Schnecke des beheizbaren Extruders ausgeübt werden kann; und daß das extrudierte Produkt auf einen Feuchtigkeitsgehalt von maximal 14 Gew.-% getrocknet wird, wobei das Trockenprodukt eine minimale seitliche Abmessung von 1 mm hat.

2. Verfahren nach Anspruch 1, gekennzeichnet durch derartige Scherbedingungen, daß die Temperatur in dem Extruder wenigstens 150 °C erreicht.

3. Verfahren nach Anspruch 1 oder 2, gekennzeichnet durch derartige Scherbedingungen, daß die Temperatur in dem Extruder wenigstens 170 °C erreicht.

4. Verfahren nach einem der Ansprüche 1 bis 3, dadurch gekennzeichnet, daß der anfängliche Feuchtigkeitsgehalt des zu extrudierenden Stärkeproduktes im wesentlichen 22 % beträgt.

5. Verfahren nach einem der Ansprüche 1 bis 4, wobei das Stärkeprodukt Weizen ist und die Drehgeschwindigkeit der Extruderschnecke derart ist, daß sie ohne äußere Wärmezufuhr zu einer Temperatur von mindestens 140 °C in dem Extruder führt.

6. Verfahren nach einem der Ansprüche 1 bis 4, wobei das Stärkepodukt Gerste ist und die Drehgeschwindigkeit der Extruderschnecke derart ist, daß sie ohne äußere Wärmezufuhr zu einer Temperatur von mindestens 170 °C in dem Extruder führt.

7. Verfahren nach einem der Ansprüche 1 bis 6, dadurch gekennzeichnet, daß die maximale seitliche Abmessung des extrudierten Materials nach dem Trocknen nicht mehr als 10 mm beträgt.

8. Verfahren nach einem der vorangehenden Ansprüche, dadurch gekennzeichnet, daß die seitlichen Abmessungen des extrudierten Produktes nach dem Trocknen 2 bis 3 mm betragen.

9. Verfahren nach Anspruch 7 oder 8, dadurch gekennzeichnet, daß das extrudierte Material in Körner geschnitten wird, deren Größe der von Getreidekörnern nahekommt.